# EUROPÄISCHE PATENTSCHRIFT

(11) **EP 1 620 246 B1**
(45) Veröffentlichungstag und Bekanntmachung des Hinweises auf die Patenterteilung: **20.08.2008**
(21) Anmeldenummer: 04721836.7
(22) Anmeldetag: 19.03.2004
(51) Int. Cl.: B29C 47/82, B29C 47/84, B29C 47/42, B29B 7/48

(54) **MEHRWELLENEXTRUDER**
MULTIPLE-SHAFT EXTRUDER
EXTRUDEUR A ARBRES MULTIPLES

(30) Priorität: 15.04.2003 DE 10317357
(43) Veröffentlichungstag der Anmeldung: 01.02.2006
(73) Patentinhaber: Blach Verwaltungs GmbH & Co. KG, 74348 Lauffen (DE)
(72) Erfinder: BLACH, Josef, A., 74348 Lauffen a. N. (DE)
(74) Vertreter: Berngruber, Otto
(86) Internationale Anmeldenummer: PCT/EP2004/002867
(87) Internationale Veröffentlichungsnummer: WO 2004/091889

(56) Entgegenhaltungen:
- WO-A-02/30652
- WO-A-97/31767
- DE-A- 4 433 487
- DE-A- 19 807 089
- DE-C- 3 712 749
- US-A- 5 836 682

## Beschreibung

Die Erfindung bezieht sich auf einen Extruder nach dem Oberbegriff des Anspruchs 1.

Derartige Extruder sind bekannt (EP 0788867 B1; DE 3 712 749C ; EP 0995566 B1). Das Gehäuse ist dabei in Segmente geteilt. Die Segmente können z.B. mit Materialzufuhröffnungen, Gasaustrittsöffnungen, einer Heizung, Kühlkörpern und dergleichen versehen werden, um den Extruder flexibel an die jeweils durchzuführende Materialbearbeitung anpassen zu können.

Gegenüber einem Doppelwellenextruder haben diese Mehrwellenextruder mit kranzförmig angeordneten Wellen den Vorteil, dass sie doppelt so viele Zwickel aufweisen, an denen das Material durch Übergabe von den Bearbeitungselementen einer Schnecke zur nächsten besonders wirksam bearbeitet wird. Zum Beispiel hat ein Extruder mit zwölf Wellen 24 Zwickel, d. h. jeder Welle sind zwei Zwickel zugeordnet, während ein Doppelwellenextruder nur zwei Zwickel aufweist, d. h. jeder Welle nur ein Zwickel zugeordnet ist. Als verfahrenstechnisch wirksame Zone wird an jedem Zwickel durch zusätzliches Dehnen und Stauchen des Produktes Wärme erzeugt. Die hohe Zwickelzahl führt bei Mehrwellenextrudern damit zu einem erhöhten Wärmeanfall, durch den die Temperatur des Materials so erhöht wird, dass eine Überbeanspruchung des Materials auftreten kann. Aus WO 02/30652 A1 ist es daher bekannt, das Gehäuse einstückig auszubilden und nicht nur im Gehäuse, sondern auch im Kern in Umfangsrichtung verteilte achsparallele Bohrungen als Kühlkanäle vorzusehen.

Aufgabe der Erfindung ist es, in dem Verfahrensraum eines Mehrwellenextruders mit einem aus Segmenten aufgebauten Gehäuse eine für die Bearbeitung optimale Temperatur und beim Verlassen des Verfahrensraumes eine möglichst niedere Materialtemperatur sicherzustellen.

Dies wird erfindungsgemäß mit dem im Anspruch 1 gekennzeichneten Extruder erreicht. In den Unteransprüchen sind vorteilhafte Ausgestaltungen des erfindungsgemäßen Extruders wiedergegeben.

Der erfindungsgemäße Extruder weist einen Kern auf, der mit Kühlkanälen versehen ist, die von einer Kühlflüssigkeit durchströmt werden, um in dem Verfahrensraum von innen her für einen Wärmeaustausch zu sorgen und ihn zu kühlen. Wenigstens ein, vorzugsweise jedoch zwei oder mehr Segmente des Gehäuses sind mit in Umfangsrichtung verteilten achsparallelen Kühlbohrungen versehen, die miteinander verbunden sind, wobei jedes Segment mit jeweils einem Anschluss für einen Kühlflüssigkeitszufluss und einem Kühlflüssigkeitsabfluss versehen ist, über die die Kühlflüssigkeit den Kühlbohrungen zugeführt bzw. von diesen abgeführt wird. Die Kühlbohrungen sind an dem dem Verfahrensraum zugewandten Abschnitt des Segments und damit möglichst nahe am Verfahrensraum angeordnet.

Das mit den Kühlbohrungen versehene Gehäusesegment weist zugleich eine Heizung am Aussenumfang auf. Jedes sowohl mit Kühlbohrungen wie mit einer Heizung versehene Gehäusesegment weist vorzugsweise eine Regeleinrichtung auf, die sowohl die Heizung wie den Durchfluss der Kühlflüssigkeit durch die Kühlbohrungen regelt, um eine optimale Bearbeitungstemperatur und möglichst niedrige Materialtemperatur einstellen zu können. Der Kühlflüssigkeitsdurchfluss durch die Kühlbohrungen kann mit einem Ventil im Kühlflüssigkeitszufluss oder -abfluss geregelt werden. Die Temperaturregeleinrichtung weist einen Temperaturmessfühler auf, der in dem Gehäusesegment vorgesehen ist, um die Temperatur im Verfahrensraum zu bestimmen. Mit der Heizung wird das betreffende Gehäusesegment beim Anfahren des Extruders erwärmt, um die vorgegebene Betriebstemperatur im Verfahrensraum einzustellen. Wenn während der Extrusion die Betriebstemperatur überschritten wird, schaltet die Temperaturregeleinrichtung die Heizung ab und den Kühlbohrungen in dem Gehäusesegment wird, gesteuert von der Temperaturregelung, Kühlflüssigkeit zugeführt, um den vorgegebenen Betriebstemperaturverlauf zu halten und den Wärmeentzug zonenweise unterschiedlich zu regulieren. Im Allgemeinen besteht das Gehäuse aus wenigstens drei Gehäusesegmenten, wobei vorzugsweise alle, jedenfalls die Mehrzahl der Gehäusesegmente auf diese Weise kühlbar und heizbar ausgebildet sind.

Der Kern nimmt die produktnahe Temperatur vom Verfahrensteil an und ist daher - wenn kein innerer axialer Wärmeaustausch stattfindet - am förderaufseitigen Ende nahe der Raumtemperatur und am förderabseitigen Ende nahe der höheren Produktaustrittstemperatur. Durch Intensivierung des axialen Wärmetransports mit entsprechender Wahl der Werkstoffe und deren Auslegung oder z.B. mit Hilfe eines viskosen Wärmeträgers, kann die Produkttemperatur austrittsseitig einerseits gesenkt und in Richtung Produktaufgabe andererseits bis zum Ausgleich erhöht werden. Ist dann noch ein Wärmeüberschuss vorhanden, muss dieser durch das Kühlmittel nach außen abgeführt werden, was wahlweise an beiden Enden des Verfahrensteils erfolgen kann.

Die Kühlkanäle des Kerns werden vorzugsweise durch eine Axialbohrung und einen spiralförmig um die Axialbohrung angeordneten Aussenkanal gebildet, der nahe am Verfahrensraum verläuft. Sowohl die Axialbohrung wie der spiralförmige Aussenkanal erstrecken sich über den gesamten, jedenfalls größten Teil des Verfahrensraumes, und dienen vorzugsweise dem Einstellen einer niederen Materialaustrittstemperatur.

Die Kühlflüssigkeit strömt über einen Kühlflüssigkeitszufluss am förderaufseitigen Ende des Kerns, dem der Antrieb für die Wellen benachbart ist, in die Axialbohrung im Kern und dann in Förderrichtung des Extruders zum förderabseitigen Endabschnitt des Kerns, wo sich die Produktaustrittsöffnungen befinden. Das förderabseitige Ende der Axialbohrung ist mit dem förderabseitigen Ende des spiralförmigen Aussenkanals verbunden, wodurch die Kühlflüssigkeit in dem spiralförmigen Aussenkanal im Gegenstrom zur Förderrichtung der Wellen zu dem Kühlflüssigkeitsabfluss am förderaufseitigen Ende des Extruders zurückfließt.

Der Verfahrensraum des Extruders ist am förderabseitigen und am förderaufseitigen Ende vorzugsweise mit jeweils einer Endplatte verschlossen. Während an der förderabseitigen Endplatte das Spritzwerkzeug angeschlossen wird, wird die förderaufseitige Endplatte vorzugsweise von dem Kern durchragt, wobei der Kühlflüssigkeitszufluss und der Kühlflüssigkeitsabfluss zu bzw. von den Kühlkanälen im Kern an dem aus der förderaufseitigen Endplatte ragenden Endabschnitt des Kerns vorgesehen sind.

Der Kern könnte bei nicht verschleißenden Produkten einteilig ausgeführt sein, in der Regel besteht er jedoch aus einem hohl gebohrten Dorn, in dem ein gut passender Verteiler steckt, auf dessen Oberfläche der gewünschte Kühlkanalverlauf vorzugsweise spiralförmig eingearbeitet ist. Auf dem Dorn stecken drehfest positionierte Segmente, deren äußere Form wiederum mit engem Spiel die achsparallelen Schnecken zum Teil umschließt.

Zum Anschluss des Kühlflüssigkeitszuflusses und -abflusses ist auf dem förderaufseitigen Ende des Kerns, das aus der förderaufseitigen Endplatte ragt, ein ringförmiges Segment angeordnet, das mit radialen Bohrungen zum Anschluss an die Axialbohrung und den Aussenkanal versehen ist. Das ringförmige Segment mit den radialen Bohrungen kann als Platte ausgebildet sein, durch die sich die Wellen zum Antrieb erstrecken.

Der Aussenkanal ist vorzugsweise durch eine spiralförmige Nut am Außenumfang des Verteilers gebildet, die durch den Dorn zum Verfahrensraum hin verschlossen ist. Die radialen Bohrungen zum Anschluss des Kühlflüssigkeitszuflusses und - abflusses werden durch den Dorn geführt.

Vorzugsweise sind auf dem Dorn hülsenförmige Segmente zur Bildung der achsparallelen kreissegmentförmigen Ausnehmungen z. B. durch eine Keilverzahnung mit dem Dorn drehfest angeordnet. Da die hülsenförmigen Segmente an der Innenseite des Verfahrensraumes meist einen unterschiedlichen Verschleiß ausgesetzt sind, können sie damit selektiv ausgetauscht werden.

Die Gehäusesegmente können zum Teil radial verlaufende Öffnungen zur Verbindung des Verfahrensraumes mit der äußeren Umgebung aufweisen, um dem Verfahrensraum Stoffe zuzuführen oder aus ihm abzuführen, beispielsweise Gase. Die Öffnungen erstrecken sich vorzugsweise horizontal, sind also an der Seite des Gehäuses angeordnet, oder vertikal, also nach oben oder unten. Die Öffnungen können mit festen Einbauten, beispielsweise einem Trichter, oder beweglichen Einbauten, beispielsweise einer Förderschnecke, versehen sein. Sie können auch verschlossen sein, wenn sie nicht benötigt werden.

Die Gehäusesegmente können durch Flansche miteinander verbunden werden. Vorzugsweise werden sie jedoch mit Zugankern unter Vorspannung dicht zusammengehalten. Dabei sind vorzugsweise wenigstens drei in einem Winkel von 120° versetze Zuganker vorgesehen, um einen am ganzen Umfang hohen Anpressdruck zwischen den Segmenten zu erzielen. Wegen der sich vertikal und horizontal erstreckenden Öffnungen in dem Gehäusesegment werden jedoch bevorzugt vier Zuganker verwendet, die gegenüber der Horizontalen bzw. Vertikalen um 45° versetzt sind.

Die Zuganker erstrecken sich durch achsparallele Bohrungen in den Gehäusesegmenten und dienen damit zugleich zur gegenseitigen radialen Positionierung der Gehäusesegmente. Die Zuganker können auch einen kleineren Durchmesser als die Bohrungen in den Gehäusesegmenten aufweisen, durch die sie hindurch geführt sind. Um die gegenseitige radiale Positionierung der Gehäusesegmente zu gewährleisten, werden dann auf die Zuganker hintereinander mehrere hülsenförmige Füllstücke gesteckt. Die hülsenförmigen Füllstücke haben den Vorteil, dass bei der Demontage des Gehäuses die Gehäusesegmente einzeln abgenommen werden können, also nicht gleich das ganze Gehäuse auseinander fällt, wenn die Zugstangen herausgezogen werden.

Die Zugstangen greifen vorzugsweise mit einem Ende an dem förderabseitigen Gehäusesegment und mir ihrem anderen Ende an einer ringförmigen Platte an, die förderabseitig der Materialzufuhröffnung vorgesehen ist. Mit dieser Platte kann der Extruder auf einem Maschinengestell befestigt werden. Damit werden das Drehmoment und die Zugkräfte, die im Gehäuse bei der Bearbeitung des Materials auftreten, über diese Platte unter Umgehung des Gehäusesegments mit der Materialzufuhröffnung in das Maschinengestell geleitet. Damit greifen an dem Gehäusesegment mit der Materialzufuhröffnung keine nennenswerten Axial- und Torsionskräfte an. Es kann damit aus zwei mit axialem Abstand angeordneten Platten bestehen, zwischen denen eine dünne Wand, beispielsweise aus Blech, lösbar befestigt ist. Damit ist eine schnelle gründliche Reinigung der Schneckenelemente auf den Wellen im Einzugsbereich möglich, da sich das in diesem Bereich noch pulverförmige Material an den Schnecken häufig fest anlegt.

Vorzugsweise schließt sich an das Segment mit der Materialzufuhröffnung förderabseitig ein Segment mit einer sich förderabwärts verjüngenden trichterförmigen Innenwand an. Durch dieses trichterförmige Einzugssegment wird ein Materialring um die Welle gebildet, der zu einer gleichmäßigen Materialverteilung in dem Verfahrensraum führt. Das trichterförmige Einzugssegment kann sich in die Platte hineinerstrecken, an der die Zugstangen mit ihren Enden angreifen.

Während das segmentierte Gehäuse und der Kern radial und in Umfangsrichtung gegenüber einander fixiert sind, ist das Gehäuse gegenüber dem Kern axial beweglich ausgebildet, um Temperaturunterschiede zwischen Gehäuse und Kern zu kompensieren. Dazu kann das Gehäuse förderaufseitig von der Materialzufuhröffnung auf dem Kern axial verschiebbar gelagert sein.

Die Gehäusesegmente zwischen der Platte, die sich auf dem Maschinengestell abstützt, und der förderabseitigen Endplatte, bestehen normalerweise aus langen und kurzen Segmenten. Die langen Segmente sind mit der Heizung und mit den Kühlbohrungen versehen. Die kurzen Segmente dienen in erster Linie der Zu- und Abfuhr von Stoffen und sind deshalb mit Öffnungen zur Verbindung des Verfahrensraumes mit der äußeren Umgebung versehen.

Wie eingangs erwähnt, ist der höhere Energieumsatz im Zwickel für eine gleichmäßige und intensive Bearbeitung des Produktes von grundsätzlichem Vorteil. Zum Pressen des fertig bearbeiteten Stoffes durch eine Lochplatte, ein Sieb oder ähnliches am Produktaustrag ist oft besonders hoher Druck nötig. Wegen der nachfolgend oft relativ langen Verweildauer bei der Formgebung muss die Produkttemperatur so niedrig wie möglich sein. Da der Zwickel nur zur Homogenisierung, nicht aber zum Druckaufbau einen wesentlichen Beitrag leistet, ist er für den Austragsbereich erfindungsgemäß nicht unbedingt nötig. Indem nur die geeigneten Schnecken als Einwellen- oder Doppelschnecken bis zum Ende des Gehäuses geführt werden und die anderen vor dem Austragsbereich enden, ist diese Erkenntnis einfach nutzbar. Ein Zwölfwellenextruder hat 12 Eingriffszonen und so vierundzwanzig Zwickel. Endet jede dritte Schneckenwelle, also insgesamt vier Schnecken, vor dem Austragsbereich, entstehen vier Doppelschnecken mit vier Eingriffszonen oder acht Zwickel. Endet jede zweite Schnecke also sechs vor dem Austragsbereich, bleiben sechs Einwellenschnecken bis zum Ende des Gehäuses, und die Eingriffszonen bzw. Zwickel entfallen ganz. Eine Einschränkung des Fördervolumens dadurch ergibt sich nicht, da die Strangquerschnitte und ebenso die Anzahl der Stränge unverändert bleiben. Z.B. teilt ein Zwölfwellen-Ringextruder, der mit zweigängigen Schnecken besetzt ist, das Produkt in zwölf Materialstränge, eine ebensolche Doppelschnecke teilt es in drei und ein Einwellenextruder in zwei Materialstränge auf. Bei vier Doppelschnecken und sechs Einwellenextruder sind das immer zwölf Materialstränge, die, während das Produkt im Verfahrensteil ist, aufgeteilt werden, wie beim Zwölfwellenextruder. Bei gleichen Betriebsbedingungen erreicht man im wesentlichen beim Einwellenextruder die niederste und beim Zwölfwellenextruder die höchste Materialaustrittstemperatur.

Da die Wellen, die vor dem Austragssegment enden, einem geringeren Druck ausgesetzt sind, können für diese Wellen auch kostengünstigere Axiallager eingesetzt werden.

Nachstehend ist eine Ausführungsform des erfindungsgemäßen Extruders anhand der Zeichnung beispielhaft näher erläutert. Darin zeigen:
Figur 1 einen Längsschnitt durch den Extruder;
Figur 2 bis 6 einen Querschnitt entlang der Linie II-II, III-III, IV-IV, V-V und VI-VI;
Figur 7 und 9 einen Querschnitt durch das Gehäusesegment im Flansch;
Figur 8 eine aufgerollte Darstellung der Kühlkanäle des Gehäusesegments nach Figur 7 und 9;
Figur 10 eine Teilansicht einer anderen Ausführungsform des Extruders im Längsschnitt;
Figur 11 einen Querschnitt entlang der Linie XII-XII in Figur 10 als Doppelschneckenaustrag; und
Figur 12 einen der Figur 11 entsprechenden Querschnitt für einen Einwellenaustrag.

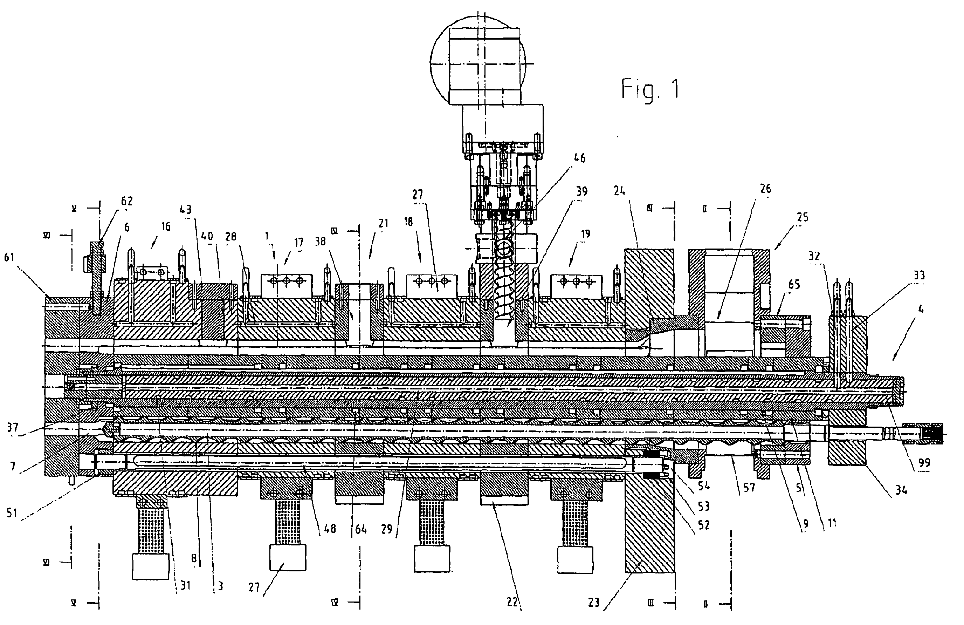

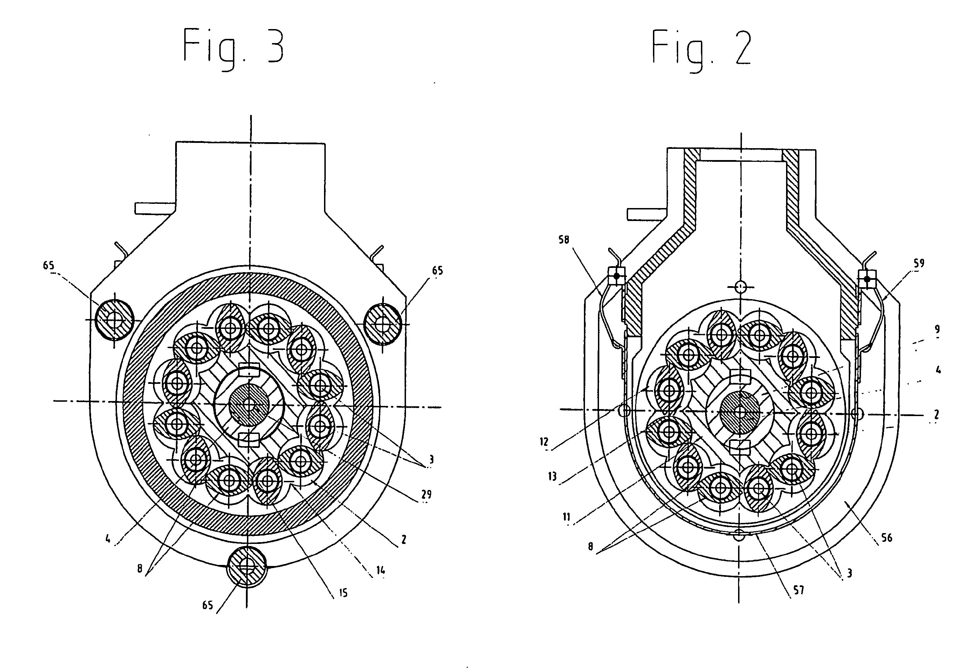

Gemäß Figur 1 und Figur 2 bis 4 weist der Extruder in einem Gehäuse 1 einen Verfahrensraum 2 auf, der sich längs eines Kreises (Figur 2 bis 4) erstreckt. In dem Verfahrensraum 2 ist eine Vielzahl achsparalleler Wellen 3 angeordnet. Der Raum 2 erstreckt sich zwischen dem Gehäuse 1 und einem axialen Kern 4.

Der Verfahrensraum 2 ist an beiden Stirnseiten mit Endplatten 5, 6 verschlossen. Durch die förderaufseitige Endplatte 5 erstrecken sich die Wellen 3, die von einem in der Zeichnung nicht dargestellten Antriebsteil gleichsinnig angetrieben werden. In der förderabseitigen Endplatte 6 sind die Materialaustrittsöffnungen 7 vorgesehen.

Auf jeder Welle 3 ist drehfest eine Vielzahl von Schneckenoder dergleichen Bearbeitungselementen 8 angeordnet. Gemäß Figur 2 bis 4 greifen die Schneckenelemente 8 benachbarter Wellen 3 kämmend mit geringem Spiel, also weitgehend dicht ineinander.

Das Gehäuse 1 ist an seiner Innenseite mit achsparallelen konkaven kreissegmentförmigen Längsvertiefungen 12 versehen, desgleichen weisen die Segmente 11 des Kerns 4 entsprechend ausgebildete achsparallele, konkave, kreissegmentförmige Längsvertiefungen 13 auf. Die Längsvertiefungen 12, 13, in die die Schneckenelemente 8 mit geringem Spiel, also weitgehend dicht eingreifen, dienen der Lagerung und Führung der Wellen 3. Zwischen zwei benachbarten Längsvertiefungen 12 bzw. 13 an der Innenseite des Gehäuses 1 bzw. an der Außenseite der Segmente 11 werden Zwickel 14, 15 gebildet, an denen das zu extrudierende Material von den Bearbeitungselementen 8 von einer Welle 3 zur nächsten Welle 3 übergeben wird.

Das Gehäuse 1 ist aus mehreren längeren ringförmigen Gehäusesegmenten 16 bis 19 und dazwischen angeordneten kürzeren ringförmigen Gehäusesegmenten 21, 22 zusammengesetzt. An das förderaufseitige Gehäusesegment 19 schließt sich eine ringförmige Platte 23 an, die auf einem nicht dargestellten Maschinengestell montiert ist.

In die Platte 23 ragt ein Zufuhrsegment 24 mit einer sich förderabseitig trichterförmig verjüngenden Innenwand. Daran schließt sich förderaufseitig ein Einfüllgehäusesegment 25 mit einer Materialzufuhröffnung 26 an, an dem die Endplatte 5 befestigt ist. Das Einfüllgehäuse 25 hat an der Unterseite eine Reinigungsöffnung, die mit einem Deckel 57 leicht zugänglich zu öffnen ist.

Die Segmente 16 bis 19 sind an ihrem Außenumfang mit je einer Elektroheizung 27 versehen. Ferner weist jedes Gehäusesegment 16 bis 19 an seinem dem Verfahrensraum 2 zugewandten Abschnitt um seinen Umfang verteilte miteinander verbundene, achsparallele Kühlbohrungen 28 auf, die von einem Kühlmittel durchströmt werden. Um die Elektroheizung 26 und den Kühlkreislauf 28 zu regeln, ist jedem Gehäusesegment 16 bis 19 eine nicht dargestellte Temperaturregeleinrichtung zugeordnet.

Der Kern 4 ist kühlbar und vorzugsweise mehrteilig ausgeführt. Der hohl gebohrte Dorn 9 trägt die Segmente 11, die über eine Keilverbindung drehfest positioniert angeordnet sind. In dem Dorn 9 steckt ein gut passender Verteiler 99, der mit einer Axialbohrung 29 und einem spiralförmigen Außenkanal 31 versehen ist. An dem förderaufseitigen Ende ist der Verteiler 99 mit einem Kühlflüssigkeitszufluss 32 zu der Axialbohrung 29 und einem Kühlflüssigkeitsabfluss 33 von dem Außenkanal 31 versehen.

Der Kern 4 durchragt axial frei verschiebbar die förderaufseitige Endplatte 5 und weist auf dem freien Ende ein ringförmiges Segment 34 auf, das mit einer radialen Bohrung für den Kühlflüssigkeitszufluss 32 zur Axialbohrung 29 und dem Aussenkanal 31 zum Kühlflüssigkeitsabfluss 33 führt.

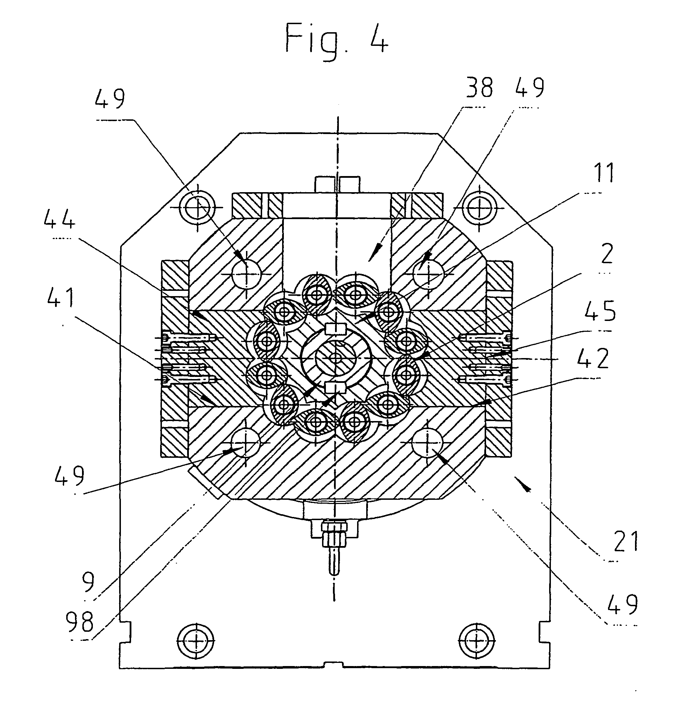

Die kürzeren Segmente 21 und 22 und das lange förderabseitige Segment 16 sind mit sich vertikal nach oben erstreckenden radialen Öffnungen 38, 39, 40 versehen. Ferner weist das Segment 21 gemäß Figur 4 zwei seitliche, horizontal verlaufende radiale Öffnungen 41, 42 auf. Die sich nach oben erstreckende Öffnung 40 in dem Segment 16 und die seitlichen Öffnungen 41, 42 in dem Segment 21 sind durch Stopfen 43, 44, 45 verschlossen. Die Öffnung 39 in dem Segment 22 ist mit einem Einbau 46 mit einer Förderschnecke versehen.

Die Gehäusesegmente 16 bis 19, 21, 22 förderabwärts der Platte 23 werden mit Zugankern 48 unter Vorspannung dicht zusammengehalten. Gemäß Figur 4 sind in den Gehäusesegmenten vier Bohrungen 49 zur Aufnahme von vier Zugankern 48 vorgesehen. Die Zugstangen 48 greifen mit einem Ende an dem förderabseitigen Gehäusesegment 16 und mit ihren anderen Ende an der Platte 23 an. Dazu ist auf das förderabseitige Ende der Stange eine Mutter 51 geschraubt, die sich an dem Gehäusesegment 16 abstützt. An ihrem förderaufseitigen Ende ist auf die Zugstangen 48 eine weitere Mutter 52 in einer Ausnehmung in der Platte 23 geschraubt, die von Spannschrauben 53 durchsetzt wird, die sich in der Ausnehmung 54 an der Platte 23 abstützen.

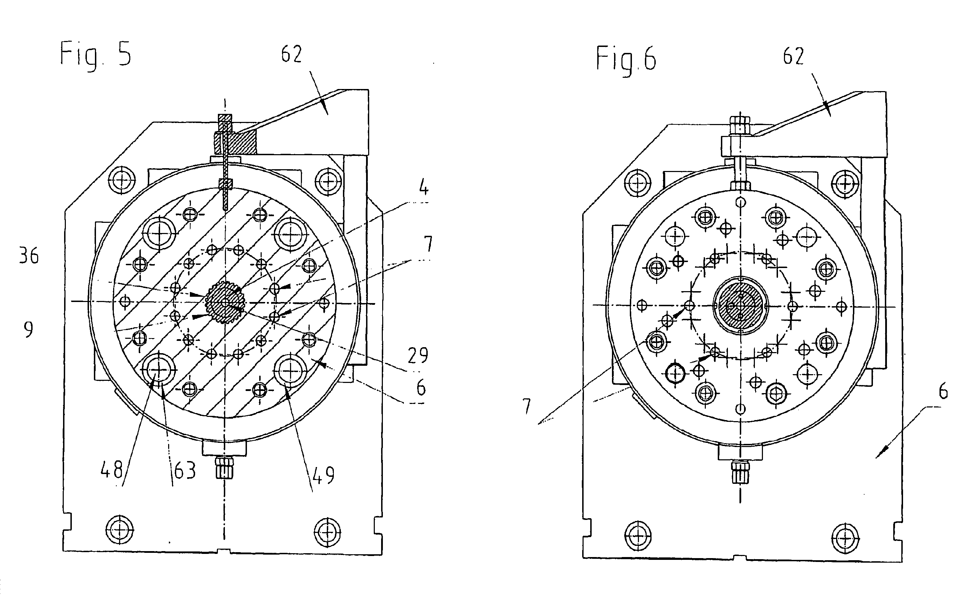

An der Endplatte 6 mit den Austrittsöffnungen 7 ist eine Platte 61 befestigt, die den nicht dargestellten Spritzkopf trägt. Mit 62 ist eine Aufhängung bezeichnet, um den Spritzkopf abnehmen zu können. Durch die in der Endplatte 6 vorgesehenen Muttern 37 wird der Kern 4 gegenüber dem Gehäuse 1 axial, radial und in Umfangsrichtung fixiert. Mit Schraubbolzen 65 werden die Endplatte 5, das Einfüllgehäuse 25 mit der Materialzufuhröffnung 26 und das Zuführgehäuse 24 mit der trichterförmigen Innenwand an der Platte 23 befestigt. Auf die Zugstangen 48 sind hülsenförmige Füllstücke 63 gesteckt (Figur 5). Die Ausnehmungen 64 an den Stirnflächen der Verschleißsegmente 11 erleichtern es, diese vom Dorn 9 abzuziehen.

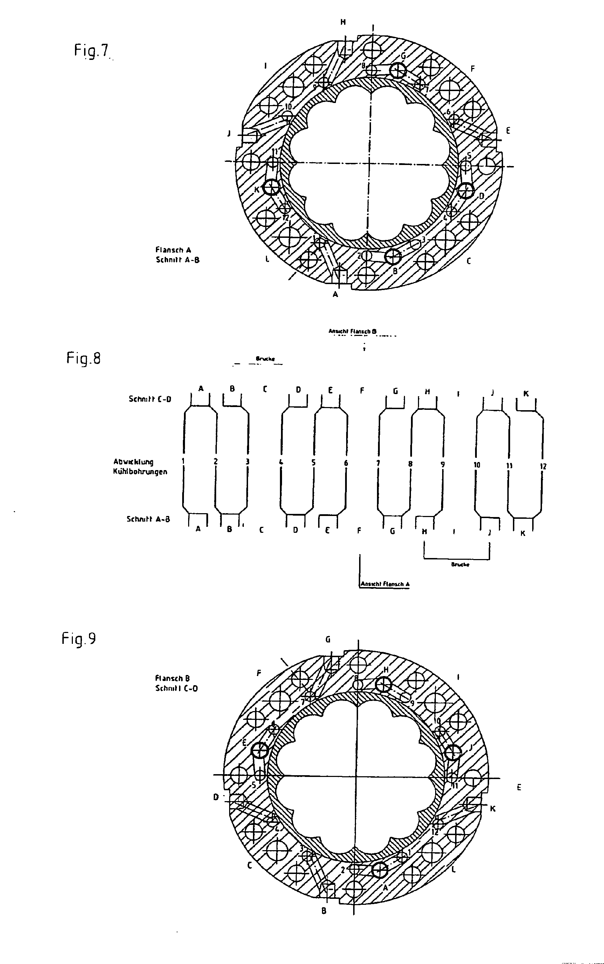

Die Gehäuse 16 bis 19 haben jeweils getrennte Kühl- und Heizkreisläufe. Figur 7 und 9 zeigen den Querschnitt durch eines dieser Gehäuse. Dabei ist das Gehäuse selbst für Flanschausführung gezeichnet, es kann aber auch bei vollem äußeren Querschnitt mit Zuganker ausgeführt sein. Ein verschleißfester Stahl zeichnet sich durch eine große Härte aus und ist deshalb auf der Produkt benetzten Innenseite des Gehäuses erforderlich. Dieses Material kann entweder pulvermetallurgisch hergestellt und unter Druck und Temperatur aufgesintert sein oder es ist ein eigener Innenkörper hergestellt worden, der in den umgebenden eigentlichen Gehäuse eingeschrumpft und/oder geklebt wird. Das äußere Gehäuse ist ein weicherer zäher und hier erfindungsgemäß nicht notwendigerweise schweißbarer Stahl, in dem die achsprallelen Kühlbohrungen 1 bis 12 eingebracht sind. Die Bohrungen C-F-I-L sind für die Passstifte oder die Zuganker vorgesehen und die stirnseitigen Gewindebohrungen B-D-G-K dienen zum Bohren der internen Verbindungen zwischen zwei benachbarten peripheren Kühlbohrungen 1-2, 5-6, 8-9 und 10-11. Es ergeben sich so vier intern verknüpfte Kühlkreisläufe 1-2-3, 4-5-6, 7-8-9, 10-11-12, die über äußere Verbindungen zu verknüpfen sind, wie z.B. über die Brücken B-C und H-J. Das übliche Verschweißen der Verbindungen zwischen den Kühlbohrungen 1 bis 12 ist nur mit getrennt hergestellten Innenkörpern möglich, da sonst bei aufgebrachter innerer Verschleißschicht diese partiell zerstört und das ganze Gehäuse unbrauchbar würde.

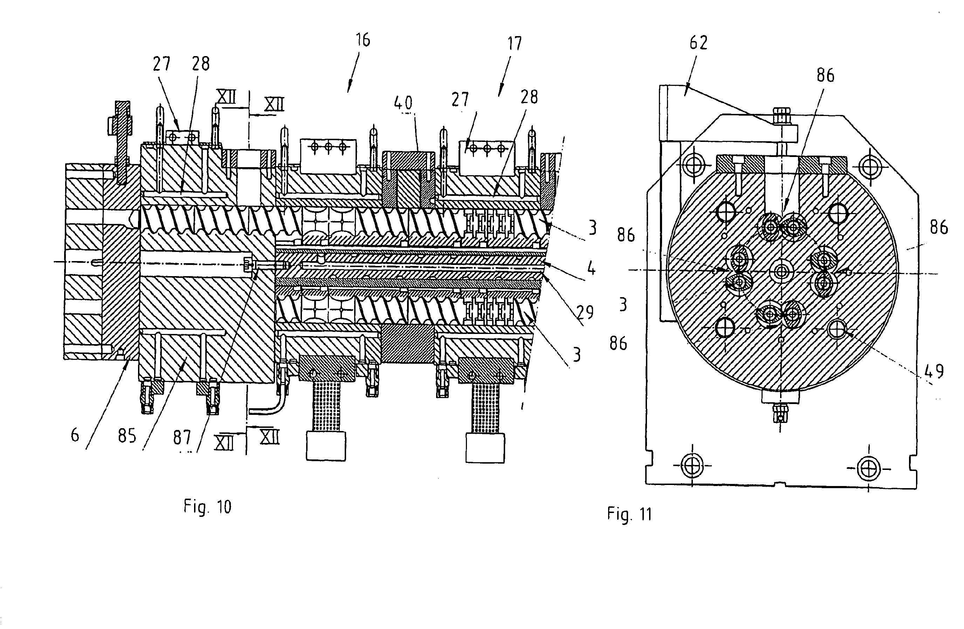

Bei der Ausführungsform nach Figur 1 bis 6 wird der Austrag des Extruders durch den Abschnitt mit dem Gehäusesegment 16 gebildet, wobei sich sämtliche zwölf Schnecken 3 (vgl. Figur 4) bis zur Endplatte 6 erstrecken. Demgegenüber ist nach der Ausführungsform nach Figur 10 und 11 ein spezielles Austragssegment 85 vorgesehen, wobei sich zwei benachbarte Wellen 3 durch entsprechende Bohrungen im Austragssegment 85 bis zur Endplatte 6 erstrecken, während die beiden benachbarten Wellen 3, von denen eine in Figur 1 zu sehen ist, ebenso wie der Kern 4 an dem Austragssegment 85 enden. D.h. jede dritte der zwölf Wellen 3 gemäß Figur 4 erstreckt sich nur bis zum Austragssegment 85. Damit werden aus den zwölf Wellen 3, die der Extruder nach Figur 4 aufweist, im Austragssegment 85 vier Doppelwellen 86 gebildet, wie aus Figur 11 ersichtlich.

Der Kern 4 ist mit dem Austragssegment 85 mit einer Schraube 87 axial verbunden und radial verdrehsicher fixiert. In Figur 10 und 11 ist das Austragssegment 85 einstückig dargestellt, es kann jedoch auch mehrteilig aufgebaut sein. So kann sich beispielsweise der Kern auch in oder durch das Austragssegment 85 erstrecken.

Das Austragssegment 85 ist in gleicher Weise wie die Gehäusesegmente 16, 17, usw., am Außenumfang mit einer Heizung 27 versehen, ferner mit Kühlbohrungen 28, die in gleicher Weise ausgebildet sind, wie die vorstehend beschriebenden Kühlbohrungen 28 in den Gehäusesegmenten 16 bis 19.

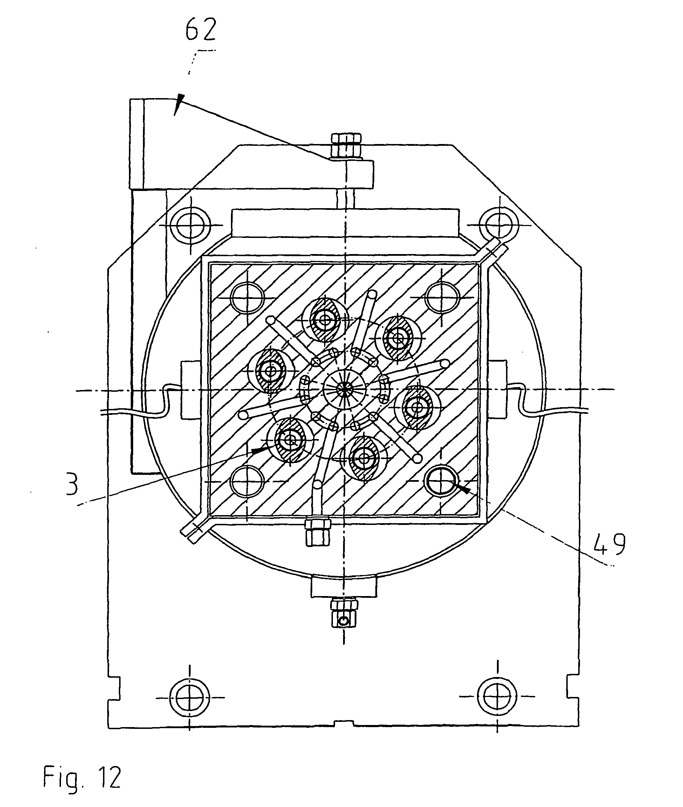

Die Ausführungsform nach Figur 12 unterscheidet sich von der nach Figur 11 im wesentlichen dadurch, dass der Produktaustrag nicht durch vier Doppelschnecken 86 sondern durch sechs Einzelschnecken 3 bewerkstelligt wird, da jede zweite Einzelschnecke 3 vor dem Austragssegment 85 endet. Auch ist es möglich, in dem Austragssegment 85 sowohl Doppelschnecken wie Einzelschnecken vorzusehen.

## Patentansprüche

1. Extruder mit mehreren in einem Verfahrensraum zwischen einem Gehäuse und einem Kern längs eines Kreises mit gleichem Zentriwinkelabstand angeordneten achsparallelen, gleichsinnig umlaufenden Wellen, die mit Bearbeitungselementen bestückt sind, mit denen benachbarte Wellen ineinander greifen, wobei an der Innenseite des Gehäuses und der Außenseite des Kerns achsparallele kreissegmentförmige Längsvertiefungen zur Aufnahme der Wellen vorgesehen sind, das Gehäuse aus Gehäusesegmenten zusammengesetzt ist, von denen wenigstens eines mit einer Heizung versehen ist, das Gehäusesegment am förderaufseitigen Ende eine Materialzufuhröffnung aufweist und am förderabseitigen Ende der Austrag vorgesehen ist, **dadurch gekennzeichnet, dass** der Kern (4) nach außen führende mit einer Kühlflüssigkeit durchströmbare Kühlkanäle aufweist, dass wenigstens ein mit einer Heizung (27) versehenes Gehäusesegment (16 bis 19) einen Kühlkreislauf mit von einer Kühlflüssigkeit durchströmbaren achsparallelen, in Umfangsrichtung verteilten, miteinander verbundenen Kühlbohrungen (28) an dem dem Verfahrensraum (2) zugewandten Abschnitt des Gehäusesegments (16 bis 19) aufweist, und dem wenigstens einem Gehäusesegment (16 bis 19) eine Temperaturregeleinrichtung zur Regelung der Heizung (27) und des Durchflusses der Kühlflüssigkeit durch die Kühlbohrungen (28) zugeordnet ist und dass der Austrag durch ein Austragssegment (85) gebildet wird, wobei sich jeweils zwei benachbarte Wellen (3) als Doppelwellen (86) in das Austragssegment (85) und die beiden den Doppelwellen (86) benachbarten Wellen (3) nur bis zum Austragssegment (85) erstrecken.

2. Extruder nach Anspruch 1, **dadurch gekennzeichnet, dass** die Kühlkanäle im Kern (4) durch eine Axialbohrung (29) und einen spiralförmig um die Axialbohrung (29) angeordneten Außenkanal (31) gebildet werden und das Kühlmittel am förderabseitigen Ende zugeführt wird und in Richtung zum förderaufseitigen Ende strömt.

3. Extruder nach einem der vorstehenden Ansprüche, **dadurch gekennzeichnet, dass** der Verfahrensraum (2) am förderaufseitigen und am förderabseitigen Ende jeweils mit einer Endplatte (5, 6) verschlossen ist.

4. Extruder nach Anspruch 2 oder 3, **dadurch gekennzeichnet, dass** der Kern (4) die förderaufseitige Endplatte (5) durchragt und der Kühlflüssigkeitszufluss (32) und der Kühlflüssigkeitsabfluss (33) an dem aus der förderaufseitigen Endplatte (5) ragenden Ende des Kerns (5) vorgesehen sind.

5. Extruder nach Anspruch 4, **dadurch gekennzeichnet, dass** der Kühlflüssigkeitszufluss (32) und -abfluss (33) durch radiale Bohrungen in einem Segment (34) gebildet wird, das auf dem aus der förderaufseitigen Endplatte (5) ragenden Ende des Kerns (4) angeordnet ist.

6. Extruder nach Anspruch 2, **dadurch gekennzeichnet, dass** der Außenkanal (31) durch eine spiralförmige Nut am Außenumfang des Verteilers (99) gebildet und durch einen Dorn (9) verschlossen ist.

7. Extruder nach Anspruch 1 und 6, **dadurch gekennzeichnet, dass** in der Endplatte (5) hülsenförmige Segmente (11) zur Bildung der achsparallelen kreissegmentförmigen Längsvertiefungen (13) angeordnet sind.

8. Extruder nach einem der vorstehenden Ansprüche, **dadurch gekennzeichnet, dass** wenigstens ein Gehäusesegment (16, 21, 22) mindestens eine sich horizontal und/oder vertikal erstreckende, radiale Öffnung (38 bis 42) zur Verbindung des Verfahrensraumes (2) mit der äußeren Umgebung aufweist.

9. Extruder nach Anspruch 8, **dadurch gekennzeichnet, dass** die Öffnung (38 bis 42) mit festen oder bewegten Einbauten (46) zur Zufuhr oder Abfuhr von Stoffen versehen ist.

10. Extruder nach Anspruch 1, **dadurch gekennzeichnet, dass** zumindest ein Teil der Gehäusesegmente (16 bis 19, 21, 22) mit Zugankern (48) unter Vorspannung dicht zusammengehalten wird.

11. Extruder nach Anspruch 10, **dadurch gekennzeichnet, dass** wenigstens drei, vorzugsweise vier Zuganker (48) vorgesehen sind.

12. Extruder nach Anspruch 10 oder 11, **dadurch gekennzeichnet, dass** die radiale Positionierung der Gehäusesegmente (16 bis 19, 21, 22) durch die Zuganker (48) erfolgt.

13. Extruder nach einem der Ansprüche 10 bis 12, **dadurch gekennzeichnet, dass** auf den Zugankern (48) hülsenförmige Füllstücke (63) vorgesehen sind.

14. Extruder nach einem der Ansprüche 10 bis 13, **dadurch gekennzeichnet, dass** die Zuganker (48) mit einem Ende an dem förderabseitigen Gehäusesegment (16) und mit ihrem anderen Ende an einer Platte (23) angreifen, die förderabseitig des Segments (25) mit der Materialzufuhröffnung (26) vorgesehen ist.

15. Extruder nach einem der vorstehenden Ansprüche, **dadurch gekennzeichnet, dass** sich an das Segment (25) mit der Materialzufuhröffnung (26) förderabwärts ein Segment (24) mit einer sich förderabwärts verjüngenden trichterförmigen Innenwand anschließt.

16. Extruder nach einem der vorstehenden Ansprüche, **dadurch gekennzeichnet, dass** das Gehäuse (1) und der Kern (4) gegeneinander einseitig axial beweglich ausgebildet sind.

17. Extruder nach Anspruch 1, **dadurch gekennzeichnet, dass** das Austragssegment (85) am Außenumfang mit einer Heizung (27) und/oder Kühlbohrungen (28) versehen ist, welche den Kühlbohrungen (28) der Gehäusesegemente (16 bis 19) entsprechen.

18. Extruder nach Anspruch 1, **dadurch gekennzeichnet, dass** das Austragssegment (85) an dem Kern (4) befestigt ist.

## Claims

1. An extruder having a plurality of axially parallel, codirectionally rotating shafts disposed in a process chamber between a housing and a core along a circle at equal central-angle distance and equipped with processing elements with which adjacent shafts mesh with each other, whereby axially parallel, circular segment shaped longitudinal depressions are provided for receiving the shafts on the inner side of the housing and the outer side of the core, the housing is composed of housing segments, at least one of which is provided with a heating means, the housing segment at the upstream conveying end has a material feed opening and the discharge is provided at the downstream conveying end, **characterized in that** the core (4) has outwardly leading cooling channels for a cooling liquid to flow through, at least one housing segment (16 to 19) provided with a heating means (27) has a cooling circuit with axially parallel, circumferentially distributed, interconnected cooling bores (28) for a cooling liquid to flow through on the portion of the housing segment (16 to 19) facing the process chamber (2), and the at least one housing segment (16 to 19) has associated therewith a temperature control device for controlling the heating means (27) and the flow of cooling liquid through the cooling bores (28), and that the discharge is formed by a discharge segment (85), whereby pairs of adjacent shafts (3) extend as double shafts (86) into the discharge segment (85), and the two shafts (3) adjacent the double shafts (86) only up to the discharge segment (85).

2. The extruder according to claim 1, **characterized in that** the cooling channels in the core (4) are formed by an axial bore (29) and an outside channel (31) disposed spirally around the axial bore (29), and the coolant is supplied at the downstream conveying end and flows toward the upstream conveying end.

3. The extruder according to either of the above claims, **characterized in that** the process chamber (2) is sealed by end plates (5, 6) at the upstream and downstream conveying ends.

4. The extruder according to claim 2 or 3, **characterized in that** the core (4) penetrates the upstream conveying end plate (5), and the cooling liquid feed (32) and the cooling liquid drain (33) are provided at the end of the core (5) protruding from the upstream conveying end plate (5).

5. The extruder according to claim 4, **characterized in that** the cooling liquid feed (32) and drain (33) are formed by radial bores in a segment (34) which is disposed on the end of the core (4) protruding from the upstream conveying end plate (5).

6. The extruder according to claim 2, **characterized in that** the outside channel (31) is formed by a spiral groove on the outside circumference of the distributor (99) and sealed by a mandrel (9).

7. The extruder according to claims 1 and 6, **characterized in that** sleeve-shaped segments (11) are disposed in the end plate (5) so as to form the axially parallel, circular segment shaped longitudinal depressions (13).

8. The extruder according to any of the above claims, **characterized in that** at least one housing segment (16, 21, 22) has at least one horizontally and/or vertically extending, radial opening (38 to 42) for connecting the process chamber (2) to the outer surroundings.

9. The extruder according to claim 8, **characterized in that** the opening (38 to 42) is provided with fixed or moving fittings (46) for supplying or removing substances.

10. The extruder according to claim 1, **characterized in that** at least some of the housing segments (16 to 19, 21, 22) are held together tightly by tie-rods (48) with prestressing.

11. The extruder according to claim 10, **characterized in that** at least three, preferably four, tie-rods (48) are provided.

12. The extruder according to claim 10 or 11, **characterized in that** the radial positioning of the housing segments (16 to 19, 21, 22) is effected by the tie-rods (48).

13. The extruder according to any of claims 10 to 12, **characterized in that** sleeve-shaped filler pieces (63) are provided on the tie-rods (48).

14. The extruder according to any of claims 10 to 13, **characterized in that** the tie-rods (48) attack at one end the downstream conveying housing segment (16) and at the other end a plate (23) provided on the downstream conveying side of the segment (25) with the material feed opening (26).

15. The extruder according to any of the above claims, **characterized in that** the segment (25) with the material feed opening (26) is followed on the downstream conveying side by a segment (24) with a funnel-shaped inside wall tapering in the downstream conveying direction.

16. The extruder according to any of the above claims, **characterized in that** the housing (1) and the core (4) are formed so as to be mutually movable axially on one side.

17. The extruder according to claim 1, **characterized in that** the discharge segment (85) is provided on the outside circumference with a heating means (27) and/or cooling bores (28) which correspond to the cooling bores (28) of the housing segments (16 to 19).

18. The extruder according to claims 1, **characterized in that** the discharge segment (85) is fastened to the core (4).

## Revendications

1. Extrudeuse comportant plusieurs arbres parallèles à l'axe, tournant dans le même sens agencé dans un espace opérationnel entre un boîtier et un noyau le long d'un cercle avec le même écart angulaire au centre, qui sont équipés d'élément de façonnage avec lesquels des arbres voisins s'engagent les uns dans les autres, des renfoncements longitudinaux parallèles à l'axe et en forme de segments de cercle étant prévus sur la face intérieure du boîtier et sur la face extérieure du noyau pour recevoir les arbres, le boîtier étant constitué par des segments de boîtier dont au moins un est pourvu d'un chauffage, le segment de boîtier à l'extrémité côté convoyage amont présentant une ouverture d'amenée de matériau et à l'extrémité convoyage aval étant prévue la sortie, **caractérisée en ce que** le noyau (4) présente des canaux de refroidissement menant vers l'extérieur et à travers lesquels peut s'écouler un liquide de refroidissement, **en ce qu'**au moins un segment de boîtier (16 à 19) pourvu d'un chauffage (27) présente un circuit de refroidissement avec des perçages de refroidissement (28) à travers lesquels peut s'écouler un liquide de refroidissement, qui sont parallèles à l'axe, répartis en direction périphérique et reliés les uns aux autres sur le tronçon tourné vers l'espace opérationnel (2), du segment de boîtier (16 à 19), et audit au moins un segment de boîtier (16 à 19) est associé un dispositif de réglage de température pour régler le chauffage (27) et le débit du liquide de refroidissement à travers les perçages de refroidissement (28), et **en ce que** la sortie est formée par un segment de sortie (85), deux arbres (3) voisins respectifs, faisant office de doubles arbres (86), s'étendant dans le segment de sortie (85), et les deux arbres (3) voisins des doubles arbres (86) ne s'étendant que jusqu'au segment de sortie (85).

2. Extrudeuse selon la revendication 1, **caractérisée en ce que** les canaux de refroidissement dans le noyau (4) sont formés par un perçage axial (29) et par un canal extérieur (31) agencé en forme de spire autour du perçage axial (29), et l'agent réfrigérant est amené à l'extrémité de convoyage côté aval et s'écoule en direction de l'extrémité de convoyage côté amont.

3. Extrudeuse selon l'une quelconque des revendications précédentes, **caractérisée en ce que** l'espace opérationnel (2) est fermé à l'extrémité de convoyage côté amont et à l'extrémité de convoyage côté aval par une plaque d'extrémité (5, 6) respective.

4. Extrudeuse selon la revendication 2 ou 3, **caractérisée en ce que** le noyau (4) traverse la plaque d'extrémité (5) côté amont de convoyage et l'amenée de l'écoulement de liquide de refroidissement (32) et l'évacuation de l'écoulement de liquide de refroidissement (33) sont prévus à l'extrémité du noyau (4) qui fait saillie hors de la plaque d'extrémité du côté amont de convoyage.

5. Extrudeuse selon la revendication 4, **caractérisée en ce que** l'amenée de l'écoulement de liquide de refroidissement (32) et l'évacuation de l'écoulement de liquide de refroidissement (33) sont formées par des perçages radiaux dans un segment (34) qui est agencé sur l'extrémité du noyau (4), qui fait saillie hors de la plaque d'extrémité (5) côté amont de convoyage.

6. Extrudeuse selon la revendication 2, **caractérisée en ce que** le canal extérieur (31) est formé par une gorge hélicoïdale à la périphérie extérieure du répartisseur (99) et fermé par un mandrin (9).

7. Extrudeuse selon la revendication 1 et 6, **caractérisée en ce que** dans la plaque d'extrémité (5) sont agencés des segments (11) en forme de douille pour former les renfoncements longitudinaux (13) parallèles à l'axe et en forme de segments de cercle.

8. Extrudeuse selon l'une quelconque des revendications précédentes, **caractérisée en ce qu'**au moins un segment de boîtier (16, 21, 22) présente au moins une ouverture (38 à 42) radiale s'étendant à l'horizontale et/ou à la verticale pour relier l'espace opérationnel (2) à l'environnement extérieur.

9. Extrudeuse selon la revendication 8, **caractérisée en ce que** l'ouverture (38 à 42) est pourvue de chicanes (46) fixes ou mobiles pour amener ou évacuer des matières.

10. Extrudeuse selon la revendication 1, **caractérisée en ce qu'**au moins une partie des segments de boîtier (16 à 19, 21, 22) est fixée de manière étanche par des tirants d'ancrage (48) sous précontrainte.

11. Extrudeuse selon la revendication 10, **caractérisée en ce qu'**il est prévu au moins trois, de préférence quatre tirants d'ancrage (48).

12. Extrudeuse selon la revendication 10 ou 11, **caractérisée en ce que** le positionnement radial des segments de boîtier (16 à 19, 21, 22) a lieu au moyen des tirants d'ancrage (48).

13. Extrudeuse selon l'une des revendications 10 à 12, **caractérisée en ce que** des pièces intercalaires (63) en forme de douilles sont prévues sur les tirants d'ancrage (48).

14. Extrudeuse selon l'une des revendications 10 à 13, **caractérisée en ce que** les tirants d'ancrage (48) attaquent par une extrémité le segment de boîtier (16) côté amont de convoyage et par l'autre extrémité une plaque (23) qui est prévue côté aval de convoyage du segment (25) avec l'ouverture d'amenée de matériau (26).

15. Extrudeuse selon l'une quelconque des revendications précédentes, **caractérisée en ce qu'**au segment (25) avec l'ouverture d'amenée de matériau (26) se raccorde en aval du convoyage un segment (24) avec une paroi intérieure en forme d'entonnoir se rétrécissant en aval de convoyage.

16. Extrudeuse selon l'une quelconque des revendications précédentes, **caractérisée en ce que** le boîtier (1) et le noyau (4) sont réalisés axialement mobiles d'un côté l'un contre l'autre.

17. Extrudeuse selon la revendication 1, **caractérisée en ce que** le segment de sortie (85) sur la périphérie extérieure est pourvu d'un chauffage (27) et/ou de perçages de refroidissement (28) qui correspondent aux perçages de refroidissement (28) des segments de boîtier (16 à 19).

18. Extrudeuse selon la revendication 1, **caractérisée en ce que** le segment de sortie (85) est fixé sur le noyau (4).
